(19) Europäisches Patentamt
European Patent Office
Office européen des brevets

(11) **EP 4 651 076 A1**

(12) **EUROPEAN PATENT APPLICATION**

(43) Date of publication:
**19.11.2025 Bulletin 2025/47**

(21) Application number: **25174108.8**

(22) Date of filing: **02.05.2025**

(51) International Patent Classification (IPC):
**G06T 7/00** (2017.01)

(52) Cooperative Patent Classification (CPC):
**G06T 7/0004; G06T 2207/30164**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **06.05.2024 US 202418655798**

(71) Applicant: **RTX Corporation**
**Farmington, CT 06032 (US)**

(72) Inventors:
• **ZHU, Hongyu**
**Farmington, 06032 (US)**

• **SURANA, Amit**
**Farmington, 06032 (US)**
• **ERDINC, Ozgur**
**Farmington, 06032 (US)**
• **CALFA, Bruno Abreu**
**Farmington, 06032 (US)**
• **LIN, Yiqing**
**Farmington, 06032 (US)**
• **RAULERSON, David**
**Farmington, 06032 (US)**
• **YANG, Ningli**
**Farmington, 06032 (US)**

(74) Representative: **Dehns**
**10 Old Bailey**
**London EC4M 7NG (GB)**

(54) **AUTOMATED ENGINE BLADE INSPECTION METHODS AND SYSTEM**

(57) A thermal acoustic imaging (TAI) inspection system (400) scans a component (103) using an infrared camera (402) to capture a plurality of image frames of friction heat emitting from a possible defect in the component. The TAI inspection system (400) generates a TAI scan (414) that is provided to an indication analysis system (700) having modules to determine whether one or more indications exist for the possible defects within the TAI scan (414). Each indication has attributes, including a matching score. The respective indication and its attributes are provided to a ranking system (716). The ranking system determines a priority score for the component or part of the component having the one or more indications based on the attributes. The priority score is used to rank the component or part of the component for further inspection operations.

FIG. 4

**Description**

Field of the Invention

The disclosed embodiments relate to an inspection system to automatically inspect engine blades having possible defects. More particularly, the disclosed embodiments related to using thermal acoustic imaging within the inspection system to automatically and accurately identify defects.

Description of the Related Art

A variety of automated or semi-automated non-destructive testing (NDT) processes are used for inspecting engine parts. Inspections may occur at the production stage or during in-field use. Thermal imaging data is captured when subjecting the part to ultrasonic stimulated thermography. The inspection system uses automated workflows to analyze the captured data. The automated workflows identify possible defects. The number parts or blades having identified possible defects may be quite large. Further, the inspection process may require a human to manually to inspect using the identified scans or images showing the possible defects. Manual analyses of scan data, especially across different presentations, are tedious, time-consuming, imprecise, and error-prone.

A need to improve the inspection process using thermal imaging may be appreciated that reduces the time and workload in manually inspected possible defects.

Summary of the Invention

The present disclosure is directed to, in a first aspect, to a method. The method includes generating a thermal acoustic imaging (TAI) scan of a component using an infrared camera. The TAI scan includes a plurality of image frames. The method also includes inputting the TAI scan to an indication detection module. The method also includes identifying at least one indication within at least one image frame of the plurality of image frames by the indication detection module. The at least one indication relates to a possible defect within the component. The method also includes providing the at least one indication to a ranking system. The at least one indication includes a plurality of attributes. The method also includes determining a priority score based on the plurality of attributes of the at least one indication by the ranking system. The method also includes ranking the component related to the at least one indication according to the priority scores.

In yet another embodiment, the present disclosure is directed to a method. The method includes generating a thermal acoustic imaging (TAI) scan of a component using an infrared camera in a TAI inspection system. The TAI scan includes a plurality of image frames. The method also includes inputting the TAI scan into an indication detection module to identify a first indication of a first possible defect and a second indication of a second possible defect within at least one of the plurality of image frames. The method also includes rescanning the component using the TAI inspection system to generate a TAI rescan for the first indication and the second indication. The method also includes determining a first matching score within a first set of attributes for the first indication and a second matching score within a second set of attributes for the second indication in the TAI scan and the TAI rescan using a match analysis module. The method also includes providing the first indication with the first set of attributes and the second indication with the second set of attributes to a ranking system. The method also includes determining a priority score for a part of the component having the first indication and the second indication based on the first set of attributes and the second set of attributes. The method also includes ranking the part of the component by the ranking system according to the priority score.

In yet another embodiment, the present disclosure is directed to an article of manufacturing including a tangible, non-transitory computer-readable storage medium having instructions stored thereon that, in response to execution by a processor, configures the processor to perform operations. The operations include generating a thermal acoustic imaging (TAI) scan of a component using an infrared camera. The TAI scan includes a plurality of image frames. The operations also include inputting the TAI scan to an indication detection module. The operations also include identifying at least one indication within at least one image frame of the plurality of image frames by the indication detection module. The at least one indication relates to a possible defect within the component. The operations also include providing the at least one indication to a ranking system. The at least one indication includes a plurality of attributes. The operations also include determining a priority score based on the plurality of attributes of the at least one indication by the ranking system. The operations also include ranking the component related to the at least one indication according to the priority score.

These, as well as other embodiments, aspects, advantages, and alternatives, will become apparent to those of ordinary skill in the art by reading the following detailed description, with reference where appropriate to the accompanying drawings. Further, this summary and other descriptions and figures provided herein are intended to illustrate embodiments by way of example only and, as such, numerous variations are possible. For instance, structural elements and process steps may be rearranged, combined, distributed, eliminated, or otherwise changed, while remaining with the scope of the disclosed embodiments.

Brief Description of the Drawings

Implementations of the inventive concepts disclosed herein may be better understood when consideration is given to the following detailed description thereof. Such description makes reference to the included drawings, which are not necessarily to scale, and which some features may be exaggerated and some features may be omitted or may be represented schematically in the interest of clarity. Like reference numerals in the drawings may represent and refer to the same or similar element, feature, or function. In the drawings:

Figure 1A illustrates a cross-sectional view of a gas-turbine engine;

Figure 1B illustrates a cross-sectional view of a high pressure compressor;

Figure 2 illustrates a front view of an integrally bladed rotor ;

Figure 3 illustrates a damaged portion of an integrally bladed rotor ;

Figure 4 illustrates a block diagram of a TAI inspection system ;

Figure 5 illustrates a block diagram showing a plurality of frames captured within a TAI scan;

Figure 6 illustrates a graph of temperature versus time for a pixel during a time period ;

Figure 7 illustrates a block diagram of an indication analysis system and a ranking system ;

Figure 8 illustrates a block diagram of a ranking system ;

Figure 9 illustrates a flowchart for determining a priority score for one or more indications detected by the TAI inspection system.

Detailed Description of the Preferred Embodiments

Before explaining at least one embodiment of the inventive concepts disclosed herein in detail, it is to be understood that the inventive concepts are not limited in their application to the details of construction and the arrangement of the components or steps or methodologies set forth in the following description or illustrated in the drawings. In the following detailed description of the embodiments of the inventive concepts, numerous specific details are set forth in order to provide a more thorough understanding of the inventive concepts. It will be apparent to one skilled in the art, however, having the benefit of the instant disclosure that the inventive concepts disclosed herein may be practiced without these specific details.

As used herein, a letter following a reference numeral is intended to reference an embodiment of the feature or element that may be similar, but not necessarily identical, to a previously described element or feature bearing the same reference numeral, such as 1, 1a, or 1b. Such shorthand notations are used for purposes of convenience only, and should not be construed to limit the inventive concepts disclosed herein in any way unless expressly stated to the contrary.

Moreover, unless expressly stated to the contrary, "or" refers to an inclusive or and not to an exclusive or. For example, a condition A or B is satisfied by anyone of the following: A is true (or present) and B is false (or not present), A is false (or not present) and B is true (or present), and both A and B are true (or present).

The inventive concepts may be described with reference to flowchart illustrations and/or block diagrams of methods, apparatus (systems) and computer program products according to embodiments of the invention. It will be understood that each block of the flowchart illustrations and/or block diagrams, and combinations of blocks in the flowchart illustrations and/or block diagrams, can be implemented by computer program instructions. These computer program instructions may be provided to a processor of a general purpose computer, special purpose computer, or other programmable data processing apparatus to produce a machine, such that the instructions, which execute via the processor of the computer or other programmable data processing apparatus, create means for implementing the functions/acts specified in the flowchart and/or block diagram block or blocks.

The flowchart and block diagrams in the figures illustrate the architecture, functionality, and operation of possible implementations of systems, methods and computer program products according to various embodiments of the present invention. In this regard, each block in the flowchart or block diagrams may represent a module, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams or flowchart illustration, and combinations of blocks in the block diagrams or flowchart illustration, can be implemented by special purpose hardware-based systems that perform the specified functions or acts, or combinations of special purpose hardware and computer instructions.

Inventive concepts may be implemented as a computer process, a computing system or as an article of manufacture such as a computer program product of computer readable media. The computer program product may be a computer storage medium readable by a computer system and encoding computer program instructions for executing a computer process. When accessed, the instructions cause a processor to enable other components to perform the functions disclosed below.

As used herein, "aft" refers to the direction associated with the tail, or the back end, of an aircraft, or to the direction of exhaust of the gas turbine. As used here, "forward" refers to the direction associated with the nose, or front end, of the aircraft, or to the direction of flight or motion.

Non-destructive testing (NDT) methods are used for inspecting engine parts. These methods include visual, ultrasonic, and thermographic sensing processes. For example, thermal acoustic imaging (TAI) is a category of thermographic NDT processes that is based on the use of images of temperature fields, gradients, or patterns at an object's surface. More specifically, TAI inspection may be used to detect internal and external damage in a variety of components, such as hollow-core turbofan engine fan blades. Part defects are represented by anomalies in infrared images generated by the TAI inspection system.

Complications in interpreting scans, however, may arise due to the presence of non-crack-like indications caused by, for example, foreign material (FM), non-uniform paint, modal pattern (MP) issues, and noise. For example, parts are painted black before scanning to avoid false indications caused by infrared reflections. Depending on the nature and degree of these type indications, a part rescan by the TAI inspection system may be required.

The NDT methods detect and classify indications to assist inspectors. The techniques may be automated or semi-automated. The techniques also may return binary results in that the identified anomaly is a defect or not. The inspection system also returns possible defects for a large number of parts. The disclosed embodiments may prioritize the indications or parts based on confidence, severity of detections, and other factors. This process helps to direction attention of inspectors as well as help them more effectively decide a subsequent course of action. This feature may be particularly desirable for re-review exercises where large amounts of historical data needs to be re-evaluated based on new inspection criterion.

With regard to TAI, defect detection in TAI images may be performed by image binarization and thresholding methods based on histogram shape, clustering, entropy, object attributes, spatial methods, and local methods. The raw temperature data versus the time profile data is extracted for the image pixels associated with a possible defect, or defect indication. The profile data may be post-processed or used as-is to fit a phenomenological model or may be processed using machine learning or artificial intelligence (AI) techniques.

The disclosed embodiments provide a system and associated methods that may be used to systematically rank the indication or parts while accounting for various relevant factors. The likelihood of each indication is provided as output instead of a binary output of defect or not defect, from existing workflow. Several factors play a role in developing a ranking system according to the disclosed embodiments. Indications may have varying likelihoods of being actual defects. In addition, some indications may be detected in regions of the component or part that are of higher concern. This situation presents a higher risk to the integrity of the part. Thus, the disclosed processes rank parts based on the criticality of their indications and prioritize re-inspection activities.

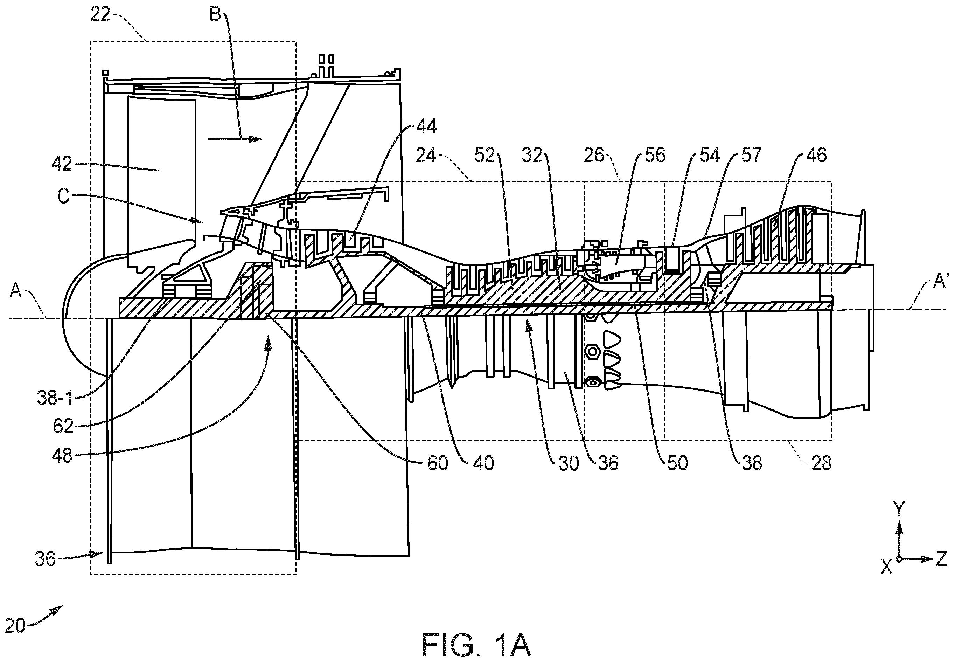

Figure 1A depicts a cross-sectional view of a gas-turbine engine 20 according to the disclosed embodiments. Gas-turbine engine 20 may be a two-spool turbofan that incorporates a fan section 22, a compressor section 24, a combustor section 26, and a turbine section 28. During operation, fan section 22 may drive air along a path of bypass airflow B while compressor section 24 can drive air along a core flow path C for compression and communication into combustor section 26 then expansion through turbine section 28.

Although depicted as a turbofan gas engine 20 herein, it may be understood that the concepts disclosed herein are not limited to use with turbofans as the teachings may be applied to other types of turbine engines including three-spool architectures, single spool architecture, and the like.

Gas turbine engine 20 may include a low speed spool 30 and a high-speed spool 32 mounted for rotation about an engine central longitudinal axis A-A' relative to engine static structure 36 or engine case via several bearing systems 38, 38-1, and so on. Engine central longitudinal axis A-A' is oriented in the Z direction on the provides X-Y-X axes. It may be understood that various bearing systems 38 at various locations may alternatively or additionally be provided, including, for example, bearing system 38, bearing system 38-1, and so on.

Low speed spool 30 may include an inner shaft 40 that interconnects a fan 42, a low pressure compressor 44, and a low pressure turbine 46. Inner shaft 40 may be connected to fan 42 through a geared architecture 48 that can drive fan 42 at a lower speed than low speed spool 30. Geared architecture 48 may include a gear assembly 60 enclosed within a gear housing 62. Gear assembly 60 couples inner shaft 40 to a rotating fan structure. High speed spool 32 may include an outer shaft 50 that interconnects a high pressure compressor 52 and high pressure turbine 54.

A combustor 56 may be located between high pressure compressor 52 and high pressure turbine 54. A mid-turbine frame 57 of engine static structure 36 may be located generally between high pressure turbine 54 and low pressure turbine 46. Mid-turbine frame 57 may support one or more bearing systems 38 in turbine section 28. Inner shaft 40 and outer shaft 50 may be concentric and rotate via bearing systems 38 about the engine central longitudinal axis A-A', which is collinear with their longitudinal axes. In some embodiments, a "high pressure" compressor or turbine experiences a higher pressure than a corresponding "low pressure" compressor or turbine.

The core airflow may be compressed by low pressure compressor 44 then high pressure compressor 52, mixed and burned with fuel in combustor 56, then expanded over high pressure turbine 54 and low pressure turbine 46. Turbines 46 and 54 rotationally drive the respective low speed spool 30 and high speed spool 32 in response to the expansion.

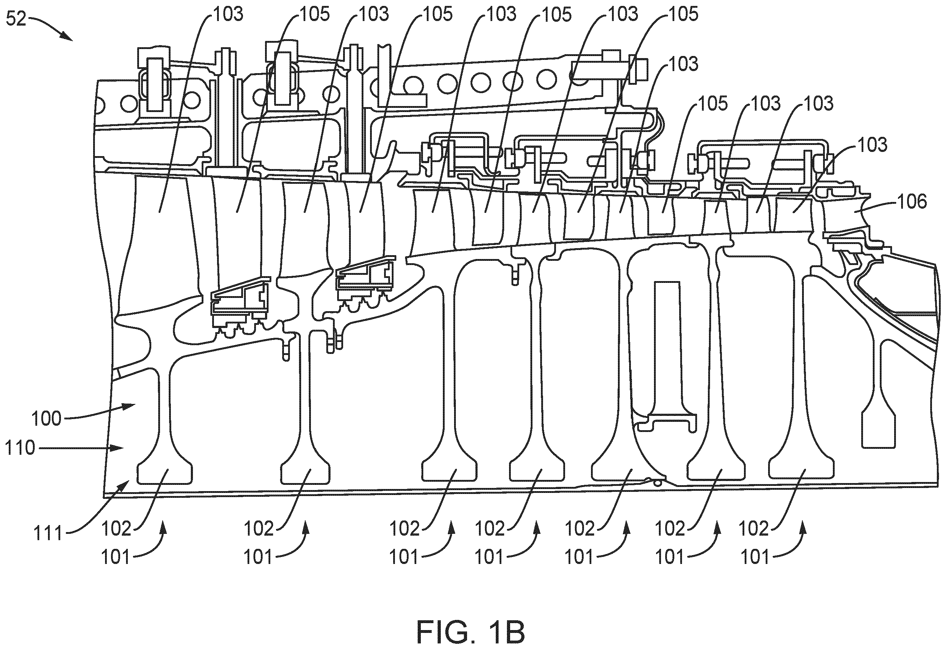

Figure 1B depicts a cross-sectional view of a high pressure compressor 52 according to the disclosed embodiments. High pressure compressor 52 of compressor section 24 of gas turbine engine 20 is provided. High pressure compressor 52 includes a plurality of blade stages 101, or rotor stages, and a plurality of vane stages 105, or stator stages. Blade stages 101 may each include an integrally bladed rotor (IBR) 100, such that blades 103 and rotor disks 102 are formed from a single integral component, or a monolithic component formed of a single piece. In some embodiments, the inspection, analysis, and repair systems disclosed herein may be utilized with bladed rotors formed of separate blades 103 and rotor disks 102.

Blades 103 extend radially outward from rotor disk 102. Gas turbine engine 20 may further include an exit guide vane stage 106 that defines the aft end of high pressure compressor 52. In some embodiments, low pressure compressor 44 may include a plurality of blade stages 101 and vane stages 105, each blade stage in the plurality of blade stages 101 including IBR 100. In other embodiments, the plurality of blade stages 101 form a stack of IBRs 110, which define, at least partially, a rotor module 111 of high pressure compressor 52 of gas turbine engine 20.

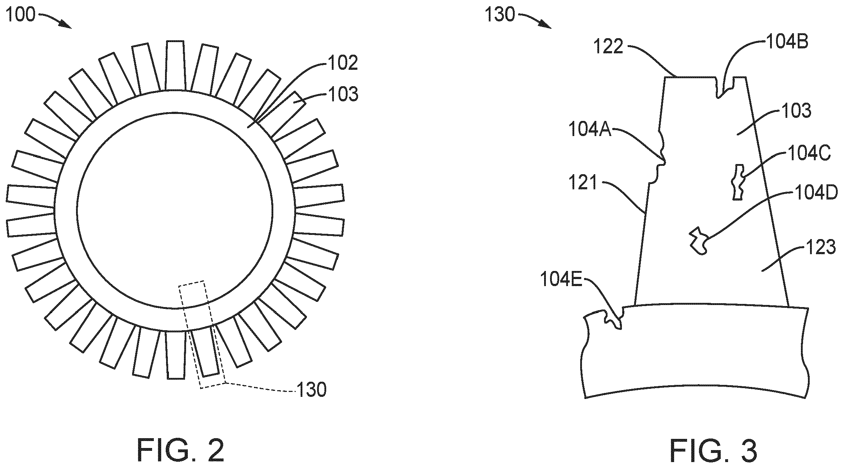

Figure 2 depicts a front view of an IBR 100 according to the disclosed embodiments. IBR 100 includes a rotor disk 102 and a plurality of blades 103 extending radially outward from rotor disk 102.

When debris is ingested into gas turbine engine 20, the debris may pass into the primary flowpath. Due to the rotation of blades 103 in the primary flowpath, the debris may contact one or more blades 103. This contact may cause damage or wear to a blade 103, or a set of blades 103. Thus, systems and methods are used for inspection, analysis, and repair of an IBR 100 to return the IBR back to service after inspection or repair. Portion 130 is shown for one of blades 103, and disclosed in greater detail by Figure 3.

Figure 3 depicts a damaged portion 130 of IBR 100 according to the disclosed embodiments. Damaged portion 130 includes a number of defects 140A-E resulting from use of IBR 100 in gas turbine engine 20 over time. Defects may be caused by damage, wear, debris, and the like. The size and shape of defects 140A-E may be exaggerated for illustrative purposes within Figure 3. In some embodiments, defects 140A-E may extend to all of blades 103 of IBR 100, rotor disk 102, a set of blades 103 of IBR 100, a single blade in blades 103, none of blades 103, and the like.

In order to repair one or all of defects 140A_E, they need to be identified and resolved such that IBR 100 can be re-introduced into service for further use. As many defects may occur after the use of gas turbine engine 20, an automated workflow process is used to identify possible defects, or indications, using inspection systems. One such system may be a TAI inspection system.

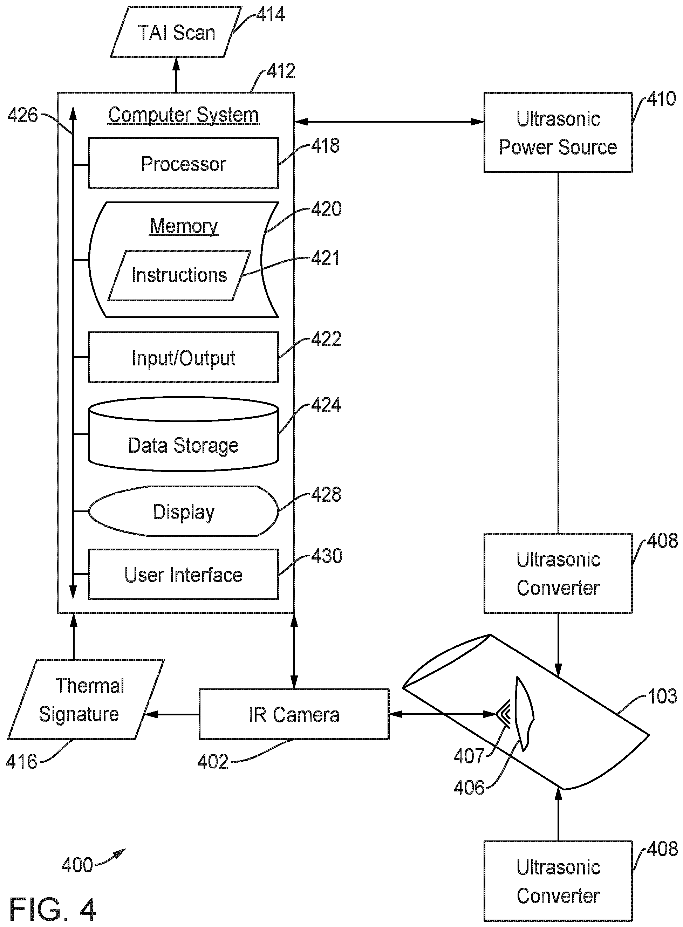

Figure 4 depicts a block diagram of a TAI inspection system 400 according to the disclosed embodiments. TAI inspection by TAI inspection system 100 detects internal and external damage in components, such as blade 103. TAI inspection system 400 collects a set of time-series temperature data at each pixel of the fan blade image using a video recording IR camera 402. If there is an indication, or discontinuity, in blade 103, then significant friction heat 407 is released around a disbonded region 406 due to vibration. The thermal variations over time are then captured by IR camera 402 to display certain patterns in the time-series temperature data in the indication area.

IR camera 402 may include one or more sensors operable to obtain thermal radiation over a wide spectral range such as from 0.5 to 22 $\mu$m in wavelength. In some embodiments, IR camera 402 may include one or more of a short-wave infrared module, a mid-wave infrared module, a long-wave infrared module, a very long-wave infrared module, and a broadband infrared module. The modules may use beam splitters to view a component such as blade 103 through one or more lenses at multiple wavelengths simultaneously. IR camera 402 may cycle through different positions to capture the IR radiation. For example, TAI inspection system 400 may cycle IR camera through 64 positions to acquire the IR video frames. IR camera 402 may capture the thermal radiation during the mechanical excitation, or heat up, phase and a cool down phase.

TAI inspection system 400 also includes ultrasonic converters 408. Ultrasonic converters 408 also may be known as ultrasonic transducers. These items within TAI inspection system 400 convert high frequency electrical energy from ultrasonic power source 410 into mechanical longitudinal vibration that is applied to blade 103. Ultrasonic converters 408 and ultrasonic power source 410 create and transmit sound energy that vibrates blade 103. Friction heat 407 is then detected by IR camera 402. Ultrasonic converters 408 may be capable of generating a broad range of frequencies, for example, from 20 kHz to about 2 MHz. This feature causes localized heating from friction, principally at the edges of a defect in blade 103.

TAI inspection system 400 also includes computer system 412. Computer system 412 may be a digital computer system configured for data acquisition and robotic controls. Computer system 412 also may serve to acquire data captured by IR camera 402 as well as control ultrasonic power source 410. Computer system 412 also may generate TAI scan 414 based on the data, or thermal signature 416, captured by IR camera 402. TAI scan 414 may include a plurality of frames having pixels showing the heat detected by IR camera 402 while blade 103 is subjected to vibrations by ultrasonic converters 408. For example, TAI scan 414 may include the specific raw frame images of each geometry of blade 103. The output of computer system 412 may be a set of geometric transformations that align images with computer-aided design models of blade 103.

Computer system 412 may include at least one processor 418, a memory 420 having instructions 421, and an input/output (I/O) subsystem 422. These components of computer system 412 may be connected to each other with data bus 426. Processor 418 may execute instructions 421 stored in memory 420 to configure computer system 412 to perform the functions and operations disclosed herein, including the operation of ultrasonic power source 410 and IR camera 402. Further, instructions 421 may configure computer system 412 to analyze thermal signature 416 and further process TAI scan 414 to detect and predict defects within the scan of a blade 103.

I/O subsystem 412 may include an I/O controller, a memory controller, and one or more I/O ports. Processor 418 and I/O subsystem 422 are communicatively coupled to memory 420 via data bus 426. Memory 420 may be embodied as any type of computer memory device, such as a volatile memory such as a random access memory. Memory 420 also may be a non-volatile memory storing instructions 421. I/O subsystem 422 also may be communicatively coupled via data bus 426 to a number of hardware, firmware, or software components, including a data storage device 424, a display device 428, and a user interface (UI) subsystem 430.

Data storage device 424 may include one or more hard drives or other suitable persistent storage devices, such as flash memory, memory cards, memory sticks, and the like. A database for models, or TAI scans 414, of blade 103 may reside at least temporarily in data storage device 424. Processing according to the disclosed embodiments of TAI scan 414 also may occur with computing system 412. The operations to execute these processes is disclosed in greater detail below. Alternatively, computing system 412 may provide TAI scan 414 to other devices that are configured to perform the operations disclosed below.

During operation, ultrasonic converters 408 induce elastic waves in blade 103 such that each single frequency of excitation is converted into a broad band of frequencies that are particular to resonant frequencies of blade 103. This vibrational energy is dissipated through conversion into heat due to friction at disbonded region 406. Heat from the blade is observed by IR camera 402, as well as localized heating from a disbond. When blade 103 is vibrated, the whole blade heats up due to friction and any disbands locally heat up more than the surrounding blade. A thermal signature 116 may be observed with IR camera 402. The amount of heat friction 407 that results in thermal signature 416 may depend upon the frequency and position of ultrasonic converters 408 and the size, shape, orientation, and depth of disbonded region 406, as well as the excitation power level.

Part defects may be represented as anomalies in the infrared images within TAI scan 414. TAI scan 414, however, also may include non-crack indications of possible anomalies due to foreign material, non-uniform paint, modal pattern, and noise. Depending on the nature and degree of these type of indications, a part rescan may be desired. Manual analysis of scan data may be tedious, time-consuming, imprecise, and error prone. Thus, TAI inspection system 400 may incorporate an automated method for detecting and classifying any indications to assist inspectors in deciding whether a defect is probable.

In determining the probability of an indication being a defect, TAI inspection system 400 may perform various operations. The operations include detecting defects within blade 103 without a rescan of the blade. For example, if indications within TAI scan 414 is suspected to be defects, then one may rescan blade 103 to see if these indications show up in the rescan data. In some instances, a rescan may not be available. For example, new preprocessing may create new indications. In these situations, all available data generated from scanning operations within TAI inspection system 400 may be used along with multiple machine learning models and advanced statistical methods.

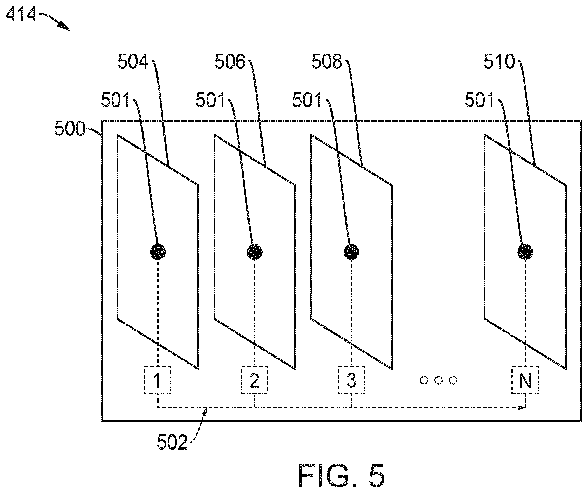

Figure 5 depicts a block diagram showing a plurality of frames 500 captured within TAI scan 414 according to the disclosed embodiments. Frames 500 may correspond to the thermal signatures 416 captured by IR camera 402 over a time period 502. As disclosed above, friction heat 407 is captured by IR camera 402 for radiation emitting from blade 103 over time. Frames also may be referred to as images or image frames.

Plurality of frames 500 includes frame 504, frame 506, frame 508 up to frame 510. Frame 510 may be the final frame in the plurality of frames 500. Frame 504 may be captured at time instance 1. Frame 506 may be captured at time instance 3. Frame 508 may be captured at time instance 3. Additional frames may be caught during additional time instances up to frame 510, which is captured at time N.

Frames 504, 506, 508, up to frame 510 includes pixels within the images of the frames. The pixels may include temperature data as captured by IR camera 402. For example, the pixels may include colors that correspond to a temperature value detected by IR camera 402 for a location on blade 103. Thus, for each frame and time unit, temperature data is captured for each pixel within the images of the frames. For example, pixel 501 is within plurality of frames 500 at a location (x,y) along an x axis and a y axis within a frame. Pixel 501 may exhibit a color for a temperature detected from the heat radiation off the corresponding location on blade 103.

Using the example, pixel 501 in frame 504 at time instance 1 may have a temperature value TM1. Pixel 501 in frame 206 at times instance 2 may have a temperature value TM2, which may differ from temperature value TM1. Pixel 501 in frame 508 may have a temperature value TM3. The temperature values within the subsequent frames may vary up to temperature value TMN for pixel 501 in frame 510. As may be appreciated, all the pixels within plurality of frames 500 may have different temperature values for time period 502. The temperature data may be collected for each pixel.

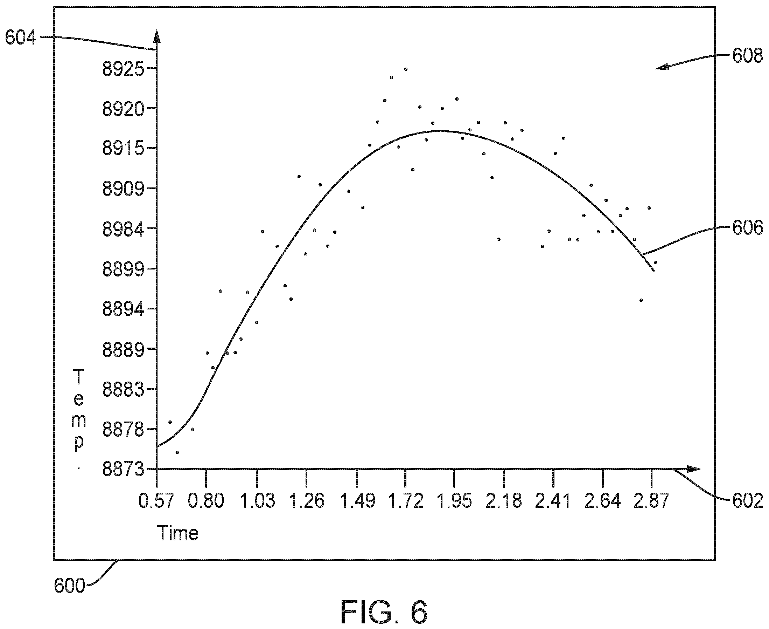

Figure 6 depicts a graph 600 of temperature versus time for pixel 501 for time period 502 according to the disclosed embodiments. Graph 600 includes time axis 602 and temperature axis 604. Temperature data 608 may be plotted within graph 600 using time axis 602. For each pixel within a frame of plurality of frames 500, it has one temperature value per frame and time unit. The temperature data of the values for all frames and time units form a time series temperature data set 608. By plotting temperature data set 608 within graph 600, curve 606 may be generated showing the relationship of the temperature values over time.

For example, if curve 606 for the time series temperature data is as shown in Figure 6, then a fluctuation in temperatures as shown by pixel 501 occurred over time period 502. The fluctuation in temperatures, including the rise in temperature as time went on, may show that a possible defect is exhibited by pixel 501. If curve 606 is relatively flat, then the energy from ultrasonic converters 408 was not converted into heat by blade 103 for the corresponding location.

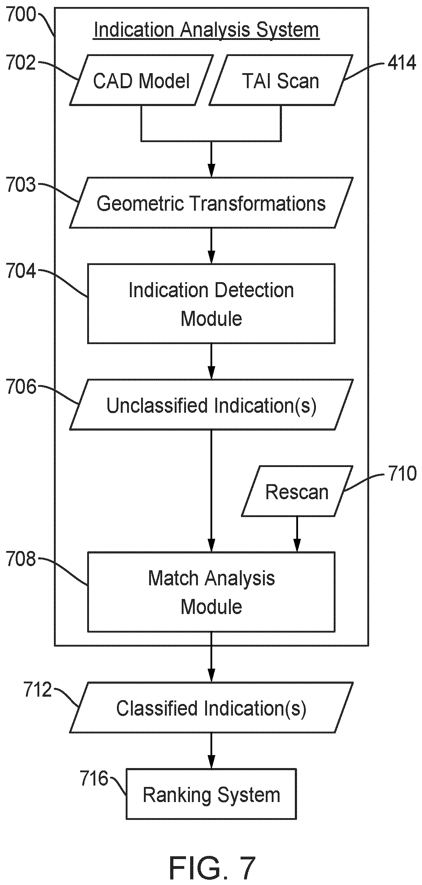

Using these relationships, the disclosed embodiments may predict whether an indication on blade 103 is a defect or a non-defect. Figure 7 depicts a block diagram of an indication analysis system 700 and a ranking system 716 according to the disclosed embodiments. In some embodiments, indication analysis system 700 and ranking system 716 may be implemented using computer system 426. Alternatively, indication analysis system 700 and ranking system 716 may be implemented on a separate computer system also including one or more processors 418, one or more memories 420 having instructions, and the other components of computer system 426 disclosed in Figure 4.

Indication analysis system 700 may automatically classify defects or indication using TAI scan 414 generated using TAI inspection system 400. For example, indication analysis system 700 may utilize learning techniques to distinguish between crack-like and other indications that may not represent physical defects in an inspected component. For example, some indications may be present in regions of no concern, such as a background wall, an edge, a solid body of blade 103, and the like. Other indications may not correspond to physical damage of the components, such as foreign material, noise, paint, and the like.

Indication analysis system 700 receives TAI scan 414. As disclosed above, TAI scan includes a plurality of frames 500. Plurality of frames 500 are image frames captured by IR camera 402 of each geometry of blade 103. Plurality of frames 500 are registered to a computer-aided design (CAD) model 702 of blade 103. The images are aligned with CAD model 702 to produce geometric transformations 703 that assist in the identification of certain types of indications in indication analysis system 700.

Geometric transformations 703 are inputted to indication detection module 704. Indication detection module 704 analyzes each registered frame image of plurality of frames 500 of each geometry to detect indications in regions of no concern, such as edge, background, solid body outside of the cavity or ribs of IBR 100, fixturing associated with clamping blade 103, and the like. Indication detection module 704 may perform this operation using heuristics or machine learning techniques. Indication detection module 704 may include algorithms or processes that detect indications using the heuristics or the machine learning techniques.

If indications are not in the regions of no concern, then they are identified as unclassified indications 706. Indication analysis system 700 requests that blade 103 be rescanned to obtain rescan 710. Rescan 710 may include a TAI rescan like TAI scan 414 combined with CAD model 702. Rescan 710 and frames 500 having unclassified indications 706 are input to match analysis module 708. Match analysis module 708 compares pairs of images from rescan 710 and TAI scan 414 to match indications based on their location in the images. In some embodiments, match analysis module 708 may use a linear assignment problem formulation based on the amount of overlap of indications, and their shape similarity. Match analysis module 708 may use machine learning with supervised learning models whose features describe geometric properties of unclassified indications 706. Unclassified indications 706 that match in location and shape may be classified as crack-like. Otherwise, they may be classified as foreign material, modal pattern, noise, and the like using unsupervised learning models, such as autoencoders.

Thus, match analysis module 708 outputs classified indications 712. Classified indications 712 are provided to ranking system 716. Ranking system 716 systematically ranks classified indications 712 by considering various relevant factors. It may be appreciated that ranking system 716 may be implemented within indication analysis system 700. In order to rank classified indications 712, ranking system 716 also receives the likelihood of each indication 712 as output instead of a binary output of it being a defect or a non-defect.

Ranking system 716 may utilize several features. Classified indications 712 may have varying likelihoods of being actual defects. Further, some classified indications 712 may be detected in regions of blade 103 having greater importance or higher concern. A defect in these regions present a higher risk to the integrity of blade 103. Ranking system 716, therefore, ranks components or parts, such as blade 103, based on the criticality of their indications and prioritize inspection operations. Ranking system 716 assigns different priority scores to components by accounting for the contribution of all detected classified indications 712.

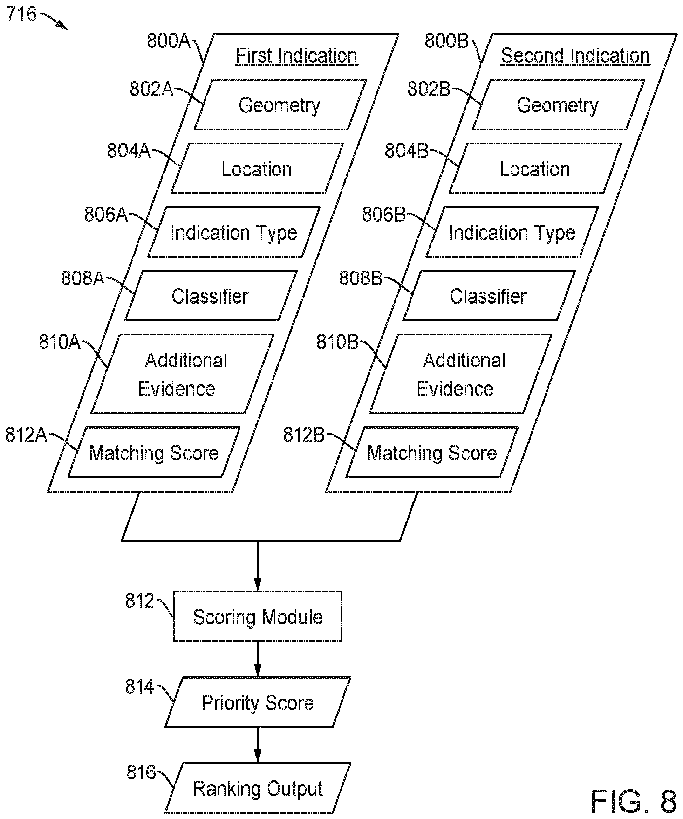

Figure 8 depicts a block diagram of ranking system 716 according to the disclosed embodiments. Ranking system 716 receives input of a set of indications for each component, such as blade 103. Each indication includes attributes. For example, indication analysis system 700 may identify first indication 800A and second indication 800B for blade 103. Additional indications may be determined, but are not shown here for brevity.

Attributes for each indication include geometry (g), location on blade (l), indication type (t), classifier ($p_k$), additional support evidence, and matching scores, if applicable. Thus, first indication 800A includes geometry 802A, location on blade 804A, indication type 806A, classifier 808A, additional evidence 810A, and matching score 812A. Second indication 800A includes geometry 802B, location on blade 804B, indication type 806B, classifier 808B, additional evidence 810B, and matching score 812B.

Scoring module 812 receives first indication 800A and second indication 800B to calculate priority score 814 for blade 103. Priority score 814 indicates how likely blade 103 has defects that are detrimental to blade integrity. In some embodiments, the priority score may be shown by Equation 1, as follows,

$$(1)\ S = \max_i w(I_i)L(I_i)$$

where *w(I)* is the importance weight associated with the indication based on its geometry (g) and location (l) on blade 103, and

where *L(I)* is how likely the indication is a defect, or a likelihood.

Higher weights are assigned for high concern geometries. For example, importance weight *w(I)* may equal 1 for a location on blade (l) in the flow path or midspan. Importance weight *w(I)* may equal 0.5 elsewhere. Referring to Figure 3, if first indication 800A corresponds to defect 140D, then its importance weight *w(I)* is 1. If second indication 800B corresponds to defect 140A, then its importance weight *w(I)* is 0.5.

The likelihood *L(I)* may be defined according to groups. A first group, or group 1, are indications in regions of no concern, such as edge, background, solid body outside of the cavity or rib, tip row foreign material, and fixturing associated with clamping the blade. A second group, or group 2, are indications in regions of concern, which may be a defect, or crack, or a non-defect caused by foreign material, modal pattern, and non-uniform paint.

Indications related to group 2 may be rescanned and subject to match indications by match analysis module 708, as disclosed above, based on their locations in the images in TAI scan 414 and rescan 710. A matching score may be defined based on the size and overlap amount of the matched indications in TAI scan 414 and rescan 710.

Thus, for example, first indication 800A may be a group 2 indication. A rescan 710 is performed on the geometry for first indication 800A. Based on the disclosed process, a matching score 812A is determined by match analysis module 708 and provided with the attributes for first indication 800A. In some embodiments, second indication 800B also may be a group 2 indication having a matching score 812B. Matching scores may range from 0 to 1, with 0 indicating low or no matching between an indication in the original and rescan images and 1 indicating a high likelihood of matching. For example, matching score 812A for first indication 800A may be 1, or a high likelihood of matching, while matching score 812B for second indication may be .2, or a lower likelihood of matching. If a rescan is not available, then the matching score may be set to a default value, such as 0.5.

Scoring module 812 may fuse a classifier, or classification, and matching score for an indication to obtain a non-conformity measure. The non-conformity measure may be the product of machine learning probability, shown by the classifier for the class defect, or $p_k$, and the matching score *m*. The classifier may indicate whether the pixels associated with the indication are a defect or not. Each pixel may have a classification of class defect $p_k$ as output from a machine learning model that provides the probabilities for each class. The number of different types of class defects may range from 1 to K. For example, the class defect classification is determined from the probability from the model that the pixels within the indication are related to a defect or not.

For example, first indication 800A may obtain a non-conformity measure by determining the product of classifier 808A of a class defect $p_k$ and matching score 812A. A conformal prediction may be determined from the non-conformity measure, which is the likelihood of a defect being shown by the indication. The conformal prediction relates to a statistical method that produces statistically valid region predictions, or prediction intervals, for any underlying predictor that may be implemented in conjunction with machine learning models.

For blade inspection, the probability of an indication being a defect can be significantly lower than not being a defect. Mondrian conformal prediction can be used for such scenario with class imbalance, i.e., the probability of some class(es) is significantly lower than other class(es). The disclosed embodiments need a holdout dataset for this calibration process. First, the score function can be defined as in Equation (2) below for sample x in which low value means data conforms to distribution of calibration dataset.

$$(2)\ s(x, k) = 1 - p_k(x)m(x), k = 1, \dots, K$$

Let $\alpha_i = s(x_i, y_i)$, $i = 1, 2, \dots, n$ for the calibration dataset with n samples. Then, Mondrian conformal prediction score for a new sample $x$ can be computed by Equation (3).

$$(3)\ P_y = \frac{\left|\{i \in \{1, \cdots, n\} | y_i = y\ \&\ \alpha_i \geq s(x, y)\}\right|}{\left|\{i \in \{1, \cdots, n\} | y_i = y\}\right|}, y = 1, \dots, K$$

Finally, the prediction can output the single class $y$ with max $P_y$ of the K classes that determines the likelihood of being a defect. Considering the case of two classes, defect ($y = 1$) and non-defect ($y = 2$). If $P_1 \geq P_2$, the prediction output y=1 is the class of defect, then the associated $P_1$ is the likelihood of being a defect. If $P_1 < P_2$, the prediction y=2 is the class of non-defect, then the likelihood of being a defect is 1 - $P_y$.

Scoring module 812 may take the conformal prediction for each indication and determine likelihood *L(I)* from the result. Referring back to Equation 1, scoring module 812 may determine *w($I_1$)L($I_1$)* for first indication 800A and *w($I_2$)L($I_2$)* for second indication 800B. As may be appreciated, blade 103 may have several indications accounted for in priority score 814. The disclosed embodiments may select the indication having the maximum product of the importance weight and the likelihood and use this value as priority score 814. In other embodiments, priority score 814 may be the summed values for the indications.

Ranking system 716 takes priority score 814 and uses it within ranking output 816 with other indications or components. Ranking output 816 may be broken into the different components, or blades. It also may be further broken into geometries for a component if a geometry is within a group 1 location. A further inspection process will consider ranking output 816 to review those possible defects that are likely to be a defect as well as important to the operation of the part. Ranking system 716 performs these operations in conjunction with TAI inspection system 400 and indication analysis system 700.

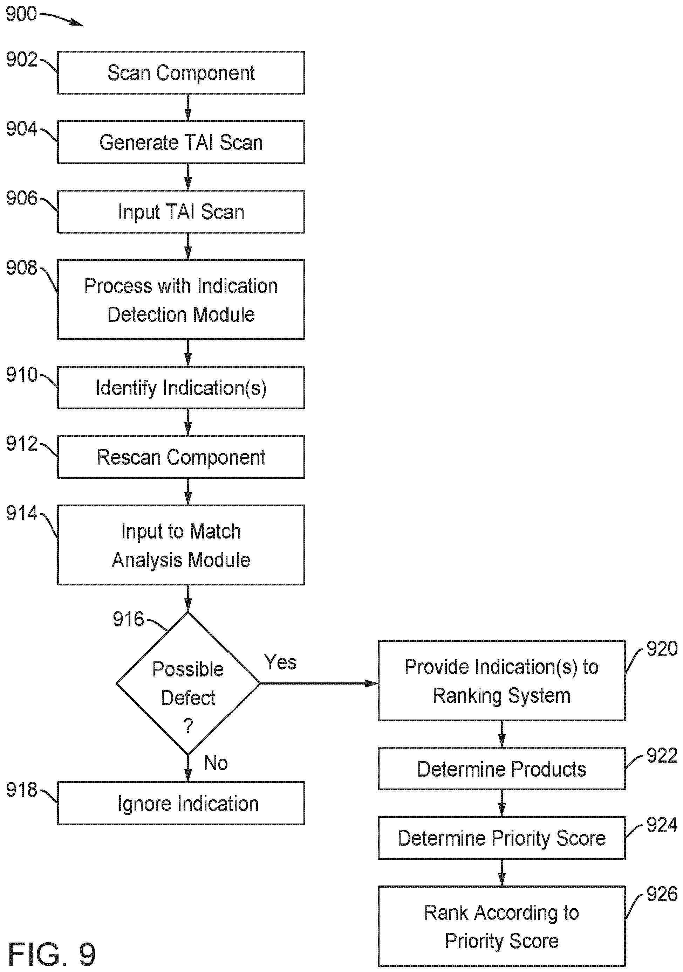

Figure 9 depicts a flowchart 900 for determining a priority score for one or more indications detected by TAI inspection system 100 according to the disclosed embodiments. Flowchart 900 may refer to Figures 1A-8 for illustrative purposes. Flowchart 900, however, is not limited to the embodiments disclosed by Figures 1A-8.

Step 902 executes by scanning a component, such as blade 103, within TAI inspection system 400. For example, ultrasonic converters 408 cause blade 103 to emit friction heat 407 from disbonded region 406, which corresponds to a defect within the blade, such as defect 104A, 104B, 104C, 104D, or 104E. Infrared camera 402 captures friction heat 407. Step 904 executes by generating TAI scan 414 from the captured data from infrared camera 402. TAI scan 414 may include a plurality of image frames, such as frames 500.

Step 906 executes by inputting TAI scan 414 into indication analysis system 700. Frames 500 of TAI scan 414 may be aligned with CAD model 702 of blade 103. These items may be result in geometric transformations 703, which are input into indication detection module 704. In some embodiments, TAN scan 414 and CAD model 702 are aligned prior to being received at indication analysis system 700.

Step 908 executes by processing geometric transformations 703 having TAI scan 414 at indication detection module 704. This information is analyzed to detect indications of possible defects and distinguish any indications that are in regions of no concern or possibly caused due to paint. Step 910 executes by identifying one or more unclassified indications 706 using indication detection module 704. These unclassified indications relate to indications that possibly show defects within one or more plurality of frames 500.

Step 912 executes by rescanning the component, or blade 103, in those geometries, or areas, having one or more unclassified indications using infrared camera 402. A rescan TAI, shown as rescan 710 in Figure 7, is generated by TAI inspection system 400. Step 914 executes by inputting the unclassified indications in TAI scan 414 and rescan 710 into match analysis module 708. Match analysis module 708 determines a matching score for each pair of original and rescan images of each indication. The matching score indicates whether the frames scanning the part of the component having the indication possibly match. This number may be from 0 to 1, with 1 being a match.

Step 916 executes by determining whether the matching score for the respective indication is above a threshold for indicating that a possible defect is shown by the indication. For example, a matching threshold may be 0.2 so that a matching score below this value indicates that a defect probably does not exist and a matching score above this value indicates that a defect probably does exist. If step 918 is no, then step 918 executes by ignoring the indication.

If step 916 is yes, then step 920 executes by providing one or more indications for the component or a part of the component to ranking system 716. For example, two indications may be determined to possibly show a defect within a component or a part of the component. Ranking system 716 may compile both indications before performing further processing. Each indication includes attributes, as disclosed above. One of the attributes may be the matching score determined by match analysis module 708.

Step 922 executes by determining the products for each indication using one or more attributes. As disclosed by Equation 1 above, an importance weight $w(l)$ and a likelihood of defect $L(l)$ may be determined for each indication. The values for the importance weight and the likelihood of defect may be fused or multiplied together to generate a product for that indication. For example, if there are two indications, then two products may be determined.

Step 924 executes by determining a priority score for the component or part of the component having the one or more indications under consideration by ranking system 716. Again, referring back to Equation 1 above, the products corresponding to the indications are determined. The maximum score for an indication based on the importance weight of the indication and its likelihood of being a defect may be used as the priority score. Thus, the priority score takes into account several factors including a location of the indication and likelihood of being a defect as opposed to just a single factor.

Step 926 executes by ranking the component or the part of the component having the one or more indications according to the priority score with a set of other parts of the component or other components. This ranking provides guidance for further inspection operations in that the more critical possible defects are analyzed further while less critical defects are analyzed at a later time. Further, analysis may be done using the ranking of priority scores to determine trends or other features, such as certain components being ranked higher for inspections over others. This may allow the system to prioritize those components in scanning or operations using TAI inspection system 400.

As will be appreciated by one skilled in the art, the present invention may be embodied as a system, method or computer program product. Accordingly, the disclosed embodiments may take the form of an entirely hardware embodiment, an entirely software embodiment (including firmware, resident software, micro-code, etc.) or an embodiment combining software and hardware aspects that may all generally be referred to herein as a "circuit," "module," or "system." Furthermore, the present invention may take the form of a computer program product embodied in any tangible medium of expression having computer-usable program code embodied in the medium.

The corresponding structures, material, acts, and equivalents of all means or steps plus function elements in the claims below are intended to include any structure, material or act for performing the function in combination with other claimed elements are specifically claimed. The description of the present invention has been presented for purposes of illustration and description, but is not intended to be exhaustive or limited to the invention in the form disclosed. Many modifications and variations will be apparent to those of ordinary skill without departing from the scope of the invention. The embodiment was chosen and described in order to best explain the principles of the invention and the practical application, and to enable others of ordinary skill in the art to understand the invention for embodiments with various modifications as are suited to the particular use contemplated.

Modifications and equivalents may be made to the features of the claims without departing from the scope of the invention. Thus, it is intended that the present invention covers the modifications and variations disclosed above provided that these changes come within the scope of the claims.

**Claims**

1. A method comprising:

   generating a thermal acoustic imaging (TAI) scan of a component using an infrared camera, wherein the TAI scan includes a plurality of image frames;
   inputting the TAI scan to an indication detection module;
   identifying at least one indication within at least one image frame of the plurality of image frames by the indication detection module, wherein the at least one indication relates to a possible defect within the component;
   providing the at least one indication to a ranking system, wherein the at least one indication includes a plurality of attributes;
   determining a priority score based on the plurality of attributes of the at least one indication by the ranking system; and
   ranking the component related to the at least one indication according to the priority score.

2. The method of claim 1, further comprising rescanning to capture a TAI rescan of the at least one indication of the component using the infrared camera.

3. The method of claim 2, further comprising inputting the TAI scan and the TAI rescan of the at least one indication into a match analysis module to generate a matching score for the at least one indication.

4. The method of claim 3, further comprising the plurality of attributes of the at least one indication includes the matching score.

5. The method of any preceding claim, wherein the plurality of attributes includes at least one of a geometry of the at least one indication, a location on the component of the at least one indication, a type for the at least one indication, and a classifier for the at least one indication.

6. The method of claim 5, wherein determining the priority score includes applying an importance weight for the at least one indication based on the geometry or the location on the component.

7. The method of any preceding claim, wherein determining the priority score includes determining a likelihood that the at least one indication is the possible defect on the component.

8. The method of any preceding claim, wherein the at least one indication includes a first indication and a second indication.

9. The method of claim 8, wherein determining the priority score includes

   determining a first product based on the attributes for the first indication, wherein the first product includes a first likelihood that the first indication is a first defect on the component;
   determining a second product based on the attributes for the second indication, wherein the second product includes a second likelihood that the second indication is a second defect on the component; and
   determining the priority score based on the first product and the second product.

10. The method of any preceding claim, further comprising generating the TAI scan using a TAI inspection system including the infrared camera and at least one ultrasonic converter configured to generate thermal radiation at the component.

11. An article of manufacture including a tangible, non-transitory computer-readable storage medium having instructions stored thereon that, in response to execution by a processor, configures the processor to perform operations comprising:

    generating a thermal acoustic imaging (TAI) scan of a component using an infrared camera, wherein the TAI scan includes a plurality of image frames;
    inputting the TAI scan to an indication detection module;
    identifying at least one indication within at least one image frame of the plurality of image frames by the indication detection module, wherein the at least one indication relates to a possible defect within the component;
    providing the at least one indication to a ranking system, wherein the at least one indication includes a plurality of attributes;
    determining a priority score based on the plurality of attributes of the at least one indication by the ranking system; and
    ranking the component related to the at least one indication according to the priority score.

12. The article of manufacture of claim 11, wherein the plurality of attributes includes at least one of a geometry of the at least one indication, a location on the component of the at least one indication, a type for the at least one indication, and a classifier for the at least one indication.

13. The article of manufacture of claim 11 or 12, wherein the at least one indication includes a first indication and a second indication.

14. The article of manufacture of claim 13, wherein the operations further comprise

    determining a first product based on the attributes for the first indication, wherein the first product includes a first likelihood that the first indication is a first defect on the component;
    determining a second product based on the attributes for the second indication, wherein the second product includes a second likelihood that the second indication is a second defect on the component; and
    determining the priority score based on the first product and the second product.

FIG. 1A

FIG. 1B

EP 4 651 076 A1

FIG. 2

FIG. 3

EP 4 651 076 A1

TAI Scan — 414

Computer System — 412

426

Ultrasonic Power Source — 410

Processor — 418

Memory — 420

Instructions — 421

Input/Output — 422

Data Storage — 424

Display — 428

User Interface — 430

Ultrasonic Converter — 408

103

Thermal Signature — 416

IR Camera — 402

407

406

Ultrasonic Converter — 408

400

FIG. 4

FIG. 5

FIG. 6

FIG. 7

716

800A — First Indication

802A — Geometry

804A — Location

806A — Indication Type

808A — Classifier

810A — Additional Evidence

812A — Matching Score

800B — Second Indication

802B — Geometry

804B — Location

806B — Indication Type

808B — Classifier

810B — Additional Evidence

812B — Matching Score

812 — Scoring Module

814 — Priority Score

816 — Ranking Output

FIG. 8

900

902 — Scan Component

904 — Generate TAI Scan

906 — Input TAI Scan

908 — Process with Indication Detection Module

910 — Identify Indication(s)

912 — Rescan Component

914 — Input to Match Analysis Module

916 — Possible Defect ?

Yes → Provide Indication(s) to Ranking System — 920

Determine Products — 922

Determine Priority Score — 924

Rank According to Priority Score — 926

No

918 — Ignore Indication

FIG. 9

Europäisches Patentamt
European Patent Office
Office européen des brevets

# EUROPEAN SEARCH REPORT

**Application Number**

EP 25 17 4108

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2016/328835 A1 (MARESCA JR JOSEPH W [US] ET AL) 10 November 2016 (2016-11-10) | 1,2,5,8, 10-13 | INV. G06T7/00 |
| A | * abstract *<br>* paragraphs [0003], [0018], [0153], [0173], [0174] * | 3,4,6,7, 9,14 | |
| Y | FRANCESCO CIAMPA ET AL: "Recent Advances in Active Infrared Thermography for Non-Destructive Testing of Aerospace Components", SENSORS, vol. 18, no. 2, 16 February 2018 (2018-02-16), page 609, XP055715124, CH ISSN: 1424-8220, DOI: 10.3390/s18020609 | 1,2,5,8, 10-13 | |
| A | * abstract * | 3,4,6,7, 9,14 | |
| A | ZHANG HONG ET AL: "A Review of Microwave Thermography Nondestructive Testing and Evaluation", SENSORS, vol. 17, no. 5, 15 May 2017 (2017-05-15), page 1123, XP093312357, CH ISSN: 1424-8220, DOI: 10.3390/s17051123 Retrieved from the Internet: URL:https://www.ndt.net/article/ndtnet/2017/sensors-17-01123-v2.pdf> [retrieved on 2025-10-10] * abstract * | 1-14 | |

TECHNICAL FIELDS SEARCHED (IPC)

G06T

-/--

The present search report has been drawn up for all claims

| Place of search | Date of completion of the search | Examiner |
|---|---|---|
| Munich | 13 October 2025 | Rimassa, Simone |

EPO FORM 1503 03.82 (P04C01)

page 1 of 2

Europäisches
Patentamt

European
Patent Office

Office européen
des brevets

# EUROPEAN SEARCH REPORT

**Application Number**

**EP 25 17 4108**

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | LIU JIAQI ET AL: "Characterization Method of Surface Crack Based on Laser Thermography", IEEE ACCESS, IEEE, USA, vol. 9, 17 May 2021 (2021-05-17), pages 76395-76402, XP011857094, DOI: 10.1109/ACCESS.2021.3081435 [retrieved on 2021-05-26] * abstract * | 1-14 | |

-----

TECHNICAL FIELDS
SEARCHED        (IPC)

The present search report has been drawn up for all claims

| Place of search | Date of completion of the search | Examiner |
|---|---|---|
| Munich | 13 October 2025 | Rimassa, Simone |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

............................................................................

& : member of the same patent family, corresponding
document

EPO FORM 1503 03.82 (P04C01)

page 2 of 2

# EP 4 651 076 A1

## ANNEX TO THE EUROPEAN SEARCH REPORT
## ON EUROPEAN PATENT APPLICATION NO.

EP 25 17 4108

This annex lists the patent family members relating to the patent documents cited in the above-mentioned European search report.
The members are as contained in the European Patent Office EDP file on
The European Patent Office is in no way liable for these particulars which are merely given for the purpose of information.

13-10-2025

| Patent document cited in search report | Publication date | Patent family member(s) | | Publication date |
|---|---|---|---|---|
| US 2016328835 A1 | 10-11-2016 | US | 9488592 B1 | 08-11-2016 |
| | | US | 2016328835 A1 | 10-11-2016 |

For more details about this annex : see Official Journal of the European Patent Office, No. 12/82

EPO FORM P0459

23